# EUROPEAN PATENT APPLICATION

(11) **EP 3 909 440 A1**
(43) Date of publication of application: **17.11.2021**
(21) Application number: 20174715.1
(22) Date of filing: 14.05.2020
(51) Int. Cl.: A24C 5/47, A24C 5/54

(54) **A DEVICE AND A METHOD FOR FORMING ENDS OF A ROD-LIKE ARTICLE FOR TOBACCO INDUSTRY**

(71) Applicant: International Tobacco Machinery Poland SP. Z O.O., 26-600 Radom (PL)
(72) Inventor: ZADECKI, Robert, 26-600 Radom (PL)
(74) Representative: Kancelaria Eupatent.pl Sp. z.o.o

(57) **Abstract**

A device for forming tips of a rod-like article, characterized in that it comprises: a drum conveyor (26) having at least one flute (28) for transferring the rod-like article (1, 5, 10, 15) transversally to an axis (k) of the rod-like article (1, 5, 10, 15), wherein the flute (28) for transferring the rod-like article (1, 5, 10, 15) is configured to move along a first circular path (s); a first pressing element (32, 51) configured to move along a second circular path (r) and a second pressing element (33, 45, 53) configured to move along a third circular path (t), wherein the third circular path (t) is located opposite to the second circular path (s) with respect to the first circular path (r), wherein the first pressing element (32, 51) and the second pressing element (33, 45, 53) form a pair (34, 47, 50) of the pressing elements located opposite to each other, wherein at least one pressing element (32, 33, 51, 53) of the pair (34, 47, 50) of the pressing elements (32, 33, 45, 51, 53) has a concave forming surface (35, 36, 52, 54), wherein the pressing elements (32, 33, 45, 51, 53) are configured to move linearly along an axis (Y) of the flute (28) that is transverse to the first circular path (s) towards and away from each other, wherein the first circular path (s), the second circular path (r) and the third circular path (t) are arranged coaxially.

## Description

### TECHNICAL FIELD

The present invention relates to a device for forming tips of a rod-like article, a device for manufacturing the rod-like articles and a method for forming tips of the rod-like article for tobacco industry, in particular tips of cardboard tubes.

### BACKGROUND

Tobacco industry products such as cigarettes, cigarillos, filter rods, and semifinished products such as mouthpieces, filter segments have cylindrical shape and are in general defined as rod-like articles. Tobacco industry rod-like articles are usually filled with tobacco, a material comprising tobacco, a filtering material, or with elements for directing cigarette smoke or with elements having other functions, for example are filled with elements conferring scent. A filling material of the rod-like article may be glued to a wrapper or the wrapper may be wrapped around the filing material. In case the glue is not strong enough or the wrapper is not tightened to a sufficient degree, it may happen that the filling material falls out of the wrapper resulting in lower quality of the rod-like articles and lower efficiency. Therefore there is need to increase the quality of the rod-like articles by preventing the filling material from falling out from the wrapper.

Moreover, in multi-segment mouthpieces, there are often utilized thin walled tubes, as distance elements for neighbouring segments, however due to a low thickness of the wall there is a risk that the neighbouring element at least partially enters into such thin walled tube. Therefore, there is a need to provide a device for forming the tips of the rod-like articles in the form of tubes in such a way that the formed tips can act as a restriction element for neighbouring segments in the multi-segment mouthpiece.

### SUMMARY OF THE INVENTION

The object of the invention is a device for forming tips of a rod-like article, comprising a drum conveyor having at least one flute for transferring the rod-like article transversally to an axis of the rod-like article, wherein the flute for transferring the rod-like article is configured to move along a first circular path. Moreover, the device is provided with a first pressing element configured to move along a second circular path and a second pressing element configured to move along a third circular path, wherein the third circular path is located opposite to the second circular path with respect to the first circular path, wherein the first pressing element and the second pressing element form a pair of the pressing elements located opposite to each other, wherein at least one pressing element of the pair of the pressing elements has a concave forming surface. The pressing elements are configured to move linearly along an axis of the flute that is transverse to the first circular path towards and away from each other. The first circular path, the second circular path and the third circular path are arranged coaxially.

The concave forming surface may be a surface selected from the group comprising a spherical surface, a paraboloid surface and a conical surface.

A protrusion for forming the tip of the rod-like article may be located on the concave forming surface.

The protrusion may have the form of a cylindrical pin.

The protrusion may have the form of a conical pin.

Both pressing elements may have the concave forming surface.

The first pressing element may have the concave forming surface and the second pressing element is a supporting element terminated with a flat supporting surface.

The pressing elements may be slidably mounted in rotating disks.

The object of the invention is also a device for producing rod-like articles for tobacco industry, comprising: a feeding device for feeding the rod-like article, a transporting device for transferring the rod-like article, a device for feeding a filling into the rod-like article and a forming device for forming tips of the rod-like article as describe above, located along a transporting path of the rod-like article downstream of the device for feeding the filling into the rod-like article.

The object of the invention is also a method for forming tips of a rod-like article, comprising the steps of: positioning the rod-like article into a flute on a first circular movement path and transferring the rod-like article along the first circular movement path transversally to an axis of said rod-like article, transferring coaxially arranged pressing elements in pairs along a second circular path and along a third circular path synchronously with the movement of the rod-like article, wherein the third circular path is located on the opposite side of the second circular path with respect to the first circular path, and linearly moving the pressing elements along an axis of the flute that is transverse to the first circular path towards and away from each other. At least one pressing element from the pair of the pressing elements has a concave forming surface, such that the linear movement of the pressing elements towards each other causes a decrease of a diameter of at least one tip of the rod-like article.

### BRIEF DESCRIPTION OF FIGURES

The object of the invention is shown in details by means of embodiments in a drawing, wherein:
Fig. 1 shows a first rod-like article in the form of a tube;
Fig. 2 shows the rod-like article of Fig. 1 with two formed tips;
Fig. 3 shows the rod-like article of Fig. 1 with one formed tip;
Fig. 4 shows a second rod-like article in the form of a tube with a filling;
Fig. 5 shows the rod-like article of Fig. 4 with two formed tips;
Fig. 6 shows a third rod-like article in the form of a tube with a filling in the form of an object;
Fig. 7 shows the rod-like article of Fig. 6 with two formed tips;
Fig. 8 shows a fourth rod-like article in the form of a tube with a filling in the form of a filled tube;
Fig. 9 shows the rod-like article of Fig. 8 with two formed tips;
Fig. 10 shows a device for forming tips of a rod-like article, in a front view;
Figs. 11 and 12 show cross-sections through a transporter of the device for forming the tips of the rod-like article in a first embodiment;
Figs. 13 and 14 show cross-sections through the transporter of the device for forming the tips of the rod-like article in a second embodiment;
Figs. 15 and 16 show cross-sections through the transporter of the device for forming the tips of the rod-like article in a third embodiment;
Fig. 17 shows a device for producing rod-like articles in a first embodiment in an isometric view;
Fig. 18 shows a device for producing rod-like articles in a second embodiment in an isometric view.

### DETAILED DESCRIPTION

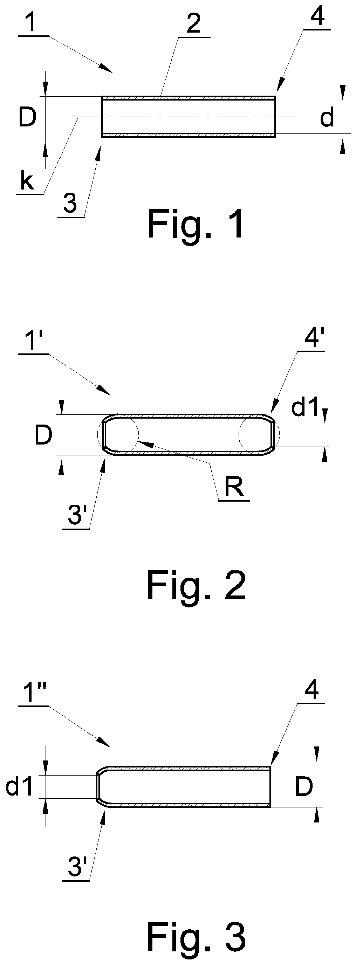

Fig. 1 shows a first rod-like article 1 in the form of a cardboard tube having a wall 2 and a longitudinal axis k, wherein the rod-like article has an outer diameter D and an inner diameter d. The rod-like article 1 has two straight cut tips 3 and 4. The rod-like article has a cylindrical shape which is usually obtained by cutting the tube from a continuous tube during a prior production stage. Fig. 2 shows a rod-like article 1' with crimped tips 3', 4' formed by crimping the tips 3, 4 on a device according to the invention. The crimped tips 3', 4' may have the form of spherical sections with a curvature radius R equal to a half of the diameter D, or they can have any other rounded surface. Fig. 3 shows a tube 1" having a first rounded tip 3', such as the tube 1', and a second straight cut, non-crimped tip 4. The crimped tips 3', 4' have openings having an inner diameter d1 which is smaller than the inner diameter d in a central section of the tube 1', 1". It is possible to form the tips 3', 4' of the rod-like article 1' by completely closing the tips.

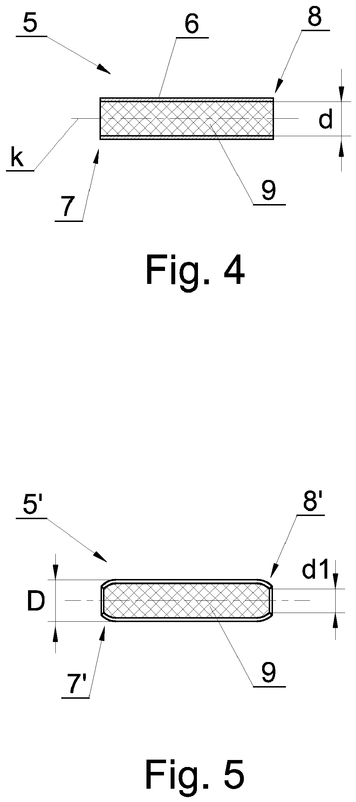

A second rod-like article 5 as shown in Fig. 4 comprises a cardboard tube 6 having two straight cut tips 7, 8 and a filling 9. The filling may be a tobacco material or a material made of tobacco, it may be a filtering material or any other preformed material, or it may be a material being formed during filling of the rod-like article, such as a foam. The filling 9 may be fixed with respect to the tube 6 by means of glue or may be simply inserted into the tube 6. Fig. 5 shows a rod-like article 5' formed after crimping the tips 7, 8 of the rod-like article 5 of Fig. 4. Crimped tips 7', 8' may have any rounded surface. The crimped tips 7', 8' protect the filling 9 from falling out of the rod-like article 5'. The crimping may be small, for example comparable to the thickness of the wall 6.

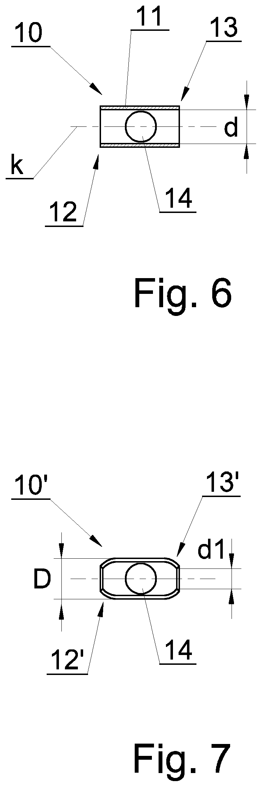

A third rod-like article 10 as shown in Fig. 6 comprises a tube 11, for example a cardboard tube, having two straight cut tips 12, 13 and a filling in the form of an object 14 that partially fills the tube 11. The object 14 may have the form of a capsule with an aromatic substance or another element, for example a rounded, longitudinal or spherical element with any filling material. The object 14 may have the form of a longitudinal, cylindrical capsule made of an openwork or perforated material filled with granulate, for example filled with activated carbon. The object 14 may be loosely or tightly inserted into the tube 11 having the inner diameter d. Fig. 7 shows a rod-like article 10' formed after crimping the tips 12, 13 of the rod-like article 10 of Fig. 6. The diameter d1 of an opening of formed tips 12', 13' is smaller than the diameter of the object 14, which protects the object 14 from falling out of the tube 11.

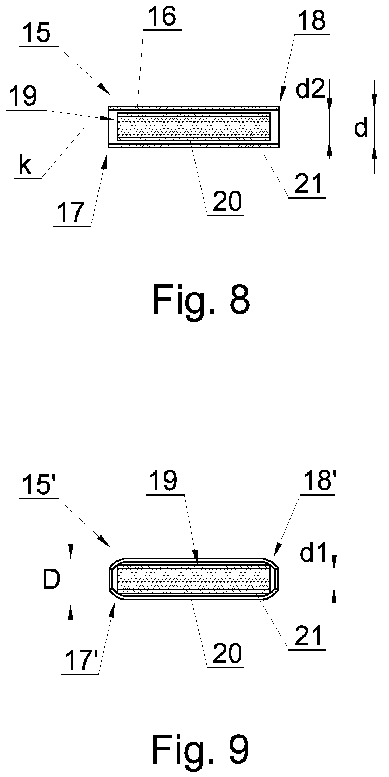

A fourth rod-like article 15 as shown in Fig. 8 comprises a cardboard tube 16 having two straight cut tips 17, 18 and an object 19 comprising a tube 20 and a filling 21, where in the tube 20 has an outer diameter d2 smaller than the inner diameter d of the tube 16. Fig. 9 shows a rod-like article 15' formed after crimping the tips 17, 18 of the rod-like article 15 of Fig. 8. Crimped tips 17', 18' restrict the object 19 inside the tube 16. The diameter d1 of the opening of the formed tips 17', 18' is smaller than the outer diameter d2 of the object 19. A filtering material may be located inside the tube 20, while the rod-like article 15 may be arranged in a cigarette mouthpiece, such that the forming of the tips 17', 18' provides that the cigarette smoke flows only through the interior of the object 19, i.e. through the filtering material and it doesn't flow around the object 19.

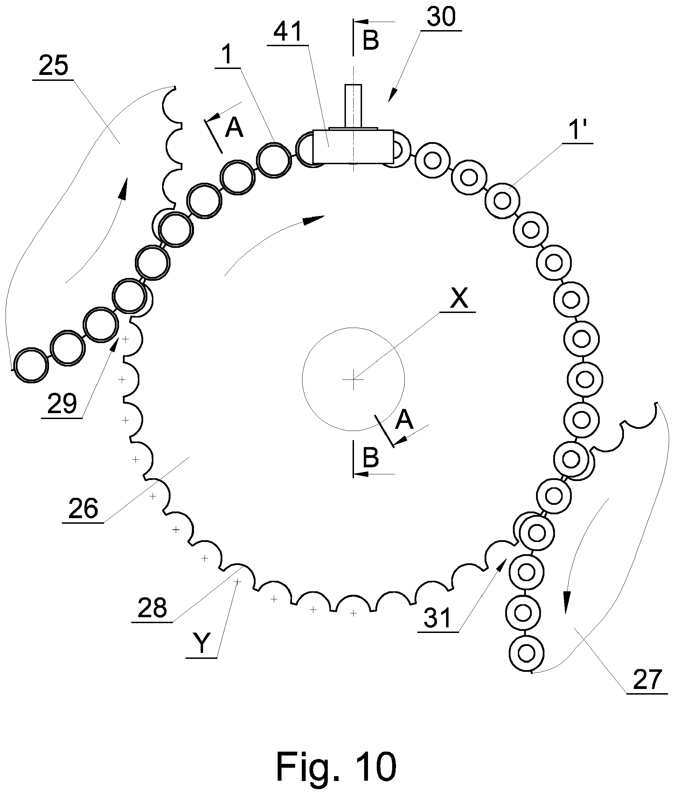

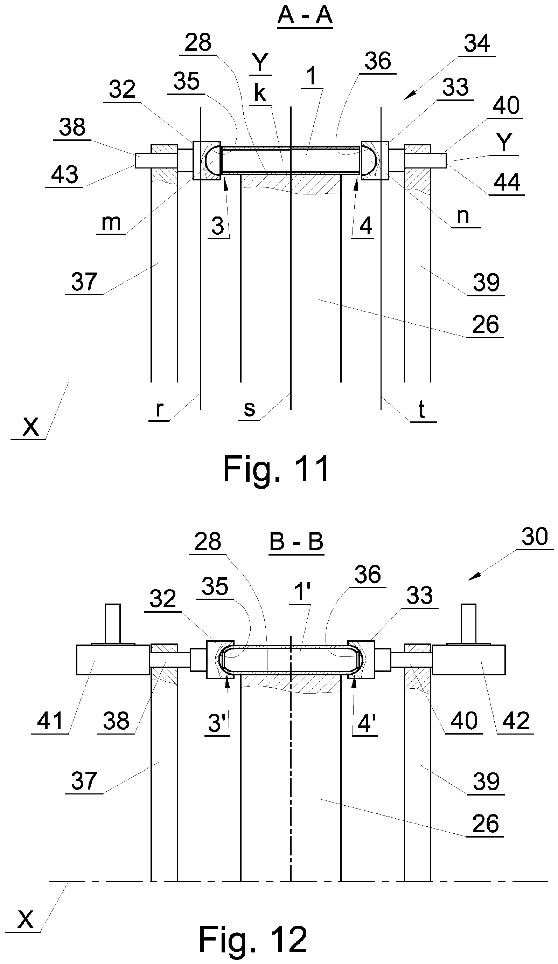

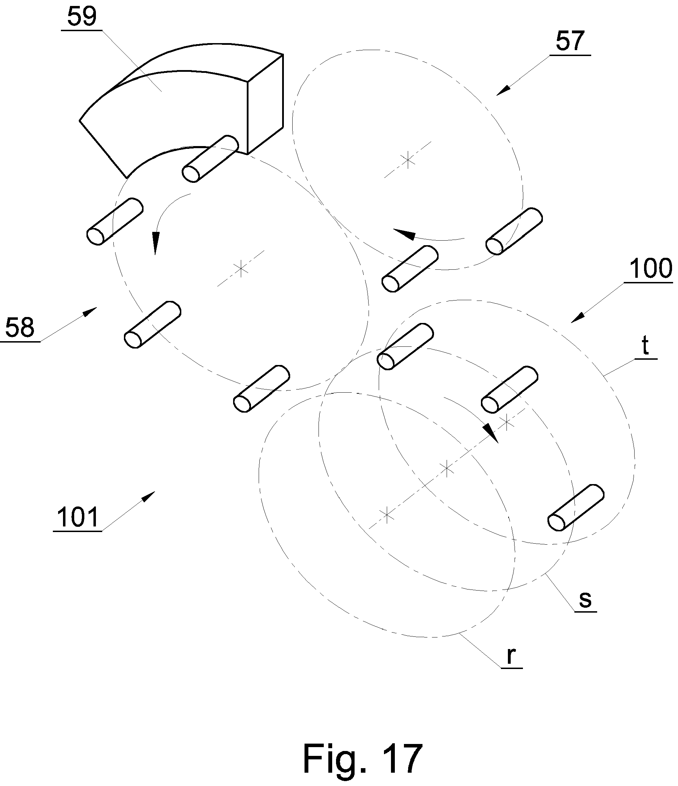

Fig. 10 shows a part of a device for forming rod-like article tips in a first embodiment. The device is equipped with rotary drum conveyors 25, 26 and 27, by means of which the rod-like article 1 with straight cut tips as shown in Fig. 1 and the rod-like article 1' with formed tips are transferred. The rod-like articles 1, 1' are transferred inside the flutes 28 and are held in these flutes by means of negative pressure. The drum conveyor 25 delivers the rod-like articles 1 to a receiving area 29 of the drum conveyor 26. The rod-like articles 1 received by the drum conveyor 26 are transferred to a forming area 30, and the formed rod-like articles 1' are transferred in a transferring area 31 onto a drum conveyor 27. On both sides of the drum conveyor 26 (as shown in Fig. 10 in front of and behind the conveyor, i.e. in front of and behind the drawing plane) there are located pressing elements 32, 33 as shown in Fig. 11 in A-A cross-section. The pressing elements 32, 33 rotate about an axis of rotation X of the drum conveyor 26 with the same velocity as the conveyor. A pair 34 of the pressing elements 32, 33 is located at each flute such that axes m and n of the pressing elements 32, 33 are arranged coaxially with an axis Y of the flute 28. During operation of the device, the axes m and n coincide also with the axis k of the rod-like article 1 which is placed and held in the flute 28. The first pressing element 32 is provided with a concave forming surface 35, and similarly the second pressing element 33 is provided with a concave forming surface 36. As shown, the forming surfaces 35, 36 have a spherical shape, wherein the centres of the spherical forming surfaces 35, 36 may be located on the axes m and n. The forming surfaces 35, 36 may have any other rounded shape, for example the forming surfaces may have a shape of a paraboloid. The forming surfaces 35, 36 may have a shape of a cone. By using the conical forming surfaces, a slight crimping of the rod-like article tips with respect to the cylindrical side surface of this article is obtained. The pressing element 32 is slidably mounted in a rotary disk 37 by means of a mandrel 38, wherein the pressing element 33 is slidably mounted in a rotary disk 39 by means of a mandrel 40. The axes of the mandrels 38, 40 may coincide with the centres of the forming surfaces 35, 36. The axes of the rotary disks 37, 39 are rotary mounted on the axis X, such as the drum conveyor 26. A seat for transporting the rod-like article 1, 1' has the form of a flute 28 and it moves together with the transported rod-like article 1, 1' along a circular path s which is located on a plane perpendicular to the plane of the drawing in Fig. 11 and Fig. 12 and shown in a perspective view in Fig. 17. The first pressing element 32 moves along a second circular path r in a plane which is perpendicular to the plane of the drawing in Fig. 11 and 12. Wherein the second pressing element 33 moves along a third circular path t also in a plane which is perpendicular to the plane of the drawing in Fig. 11 and 12, wherein the second path r and the third path t are located on opposite sides of the first path s and may be arranged symmetrically with respect to the plane of the first circular path s, wherein the axes of the circular paths s, r and t coincide with each other and coincide with the X axis of rotation.

Fig. 12 shows a cross-section B-B, as shown in Fig. 10, of the pair 34 of the pressing elements 32, 33 of Fig. 11 which are located in the forming area 30. During rotation of the drum conveyor 26 and the disks 37, 39, ends 43, 44 of the mandrels 38, 40 come into contact with a stationary rotatable rollers 41, 42, owing to which the mandrels 38, 40 move towards the flute 28 and towards the rod-like article 1, causing the movement of each forming element 32, 33 towards the rod-like article 1, i.e. the movement of the pressing elements 32, 33 towards each other that causes crimping of the tips 3, 4, and therefore their forming respectively to the shape of the first forming surface 35 and the second forming surface 36. In Fig. 12 the forming surfaces 35, 36 remain in contact with the crimped, i.e. formed tips 3', 4' of the rod-like article 1'. The movement of the pressing elements 32, 33 away from each other i.e. the return movement to initial positions may be performed by means of springs which are not shown in the drawing. The movement of the pressing elements 32, 33 towards each other and away from each other is performed transversally with respect to the plane of the circular path s, i.e. it is performed along Y axis parallel to the X axis of rotation.

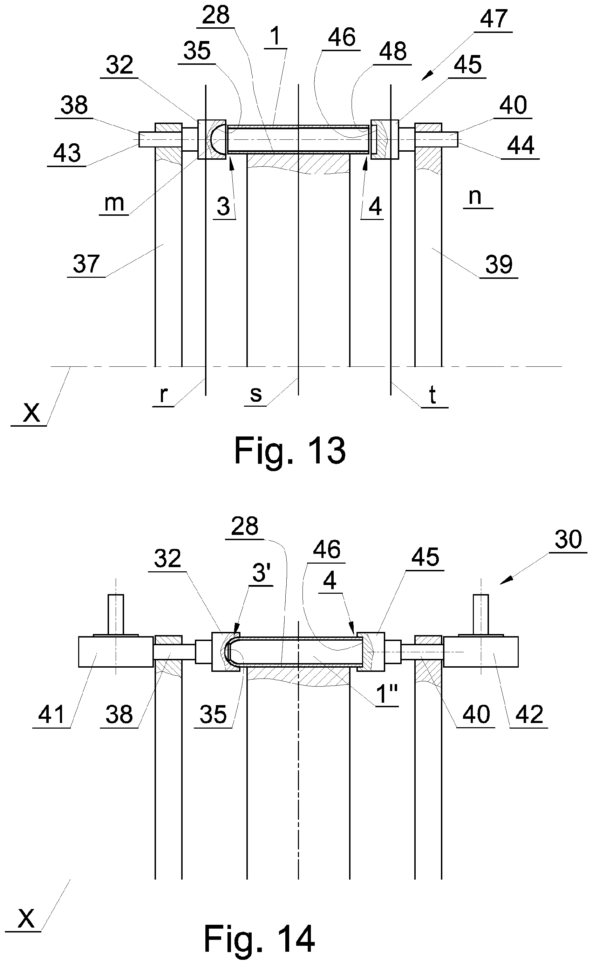

Fig. 13 shows a cross-section, as shown in Fig. 11, of a device for forming the tips of the rod-like article in a second embodiment in which a pair 47 of pressing elements comprises the pressing element 32 having a spherical forming surface 35 and the pressing element 45 having a flat supporting surface 46, wherein the flat supporting surface 46 forms a bottom of a cylindrical socket 48 in the pressing element 45. During rotation of the drum conveyor 26 and the rotary disks 37, 39, the ends 43, 44 of the mandrels 38, 40 come into contact with rotary stationary rollers 41, 42 (Fig. 14), owing to which the mandrels 38, 40 move towards the flute 28 and towards the rod-like article 1 i.e. the mandrels 38, 40 move towards each other along the Y axis causing the movement of the pressing elements 32, 45 towards the rod-like article 1, which causes crimping of the tip 3', and therefore forming the tip 3' respectively to the shape of the first forming surface 35, wherein the flat supporting surface 46 forms a supporting surface in the process of forming the tip 3'. Fig. 14 shows the forming surface 35 and the flat supporting surface 46 remaining in contact respectively with the formed tip 3' and the straight cut tip 4.

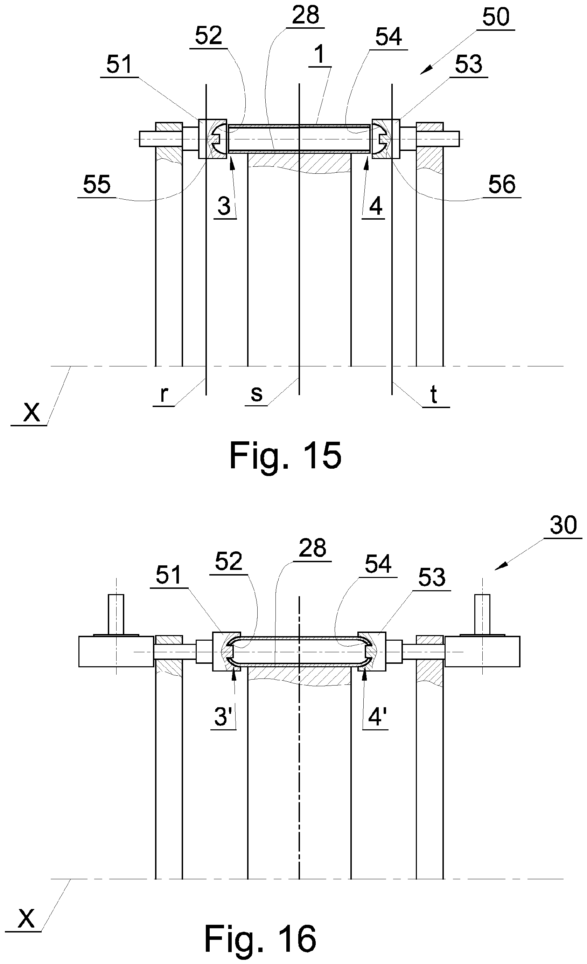

Fig. 15 shows a cross-section, as shown in Fig. 11, of a device for forming the tips of the rod-like article in a third embodiment in which a pair 50 of the forming elements comprises a forming element 51 having a spherical forming surface 52 and a pressing element 53 having a spherical forming surface 54, wherein centrally on the forming surface 52 is located a protrusion 55 in the form of a cylindrical pin, and also centrally on the forming surface 54 is located a protrusion 56 in the form of a cylindrical pin. The protrusions 55, 56 may have the form of conical pins. During operation of the device the pressing elements 51, 53 move towards the flute 28 and towards the rod-like article 1 causing crimping of the tips 3', 4' and forming the tips 3', 4' respectively to the shape of the forming surface 52, 54, wherein the outer diameters of the pins 55, 56 form openings in the tips 3', 4' and define diameters of this openings. Owing to this the diameter of the opening of the formed tip is not smaller than the diameter of the protrusion. Fig. 16 shows the forming surfaces 52, 54 remaining in contact respectively with the formed tip 3', 4'. The cylindrical pin may also be used on the flat supporting surface, for example on the surface 46 in the second embodiment and may be utilized to set the position of the rod-like article 1 on its inner surface d. Linear movement of the pressing elements may be performed such as in previous embodiments.

The pressing element can be mounted on a rotatable mechanism in which the actuating element, on which the pressing element is mounted, performs a linear movement, wherein an axis of rotation of the mechanism is located on the axis of the circular movement path of the pressing element.

In each of the aforementioned embodiments of the device for forming tips of the rod-like article, the linear movement of the pressing elements towards each other and away from each other may be realized by means of a cam mechanism.

Fig. 17 shows, in a simplified form, a device 101 for producing the rod-like articles for tobacco industry, equipped with a feeding device 57 for feeding the rod-like articles in the form of tubes, for example having the form of a drum conveyor, a transporting device 58 for transferring the rod-like articles and a device for feeding the filling 59 into the rod-like article and a forming device 100 for forming the tips of the rod-like article such as described above. The axes of rotation of the drum conveyors are arranged horizontally. The device for feeding the filling 59 may be configured to feed the capsules, the rod-like articles or other irregular objects.

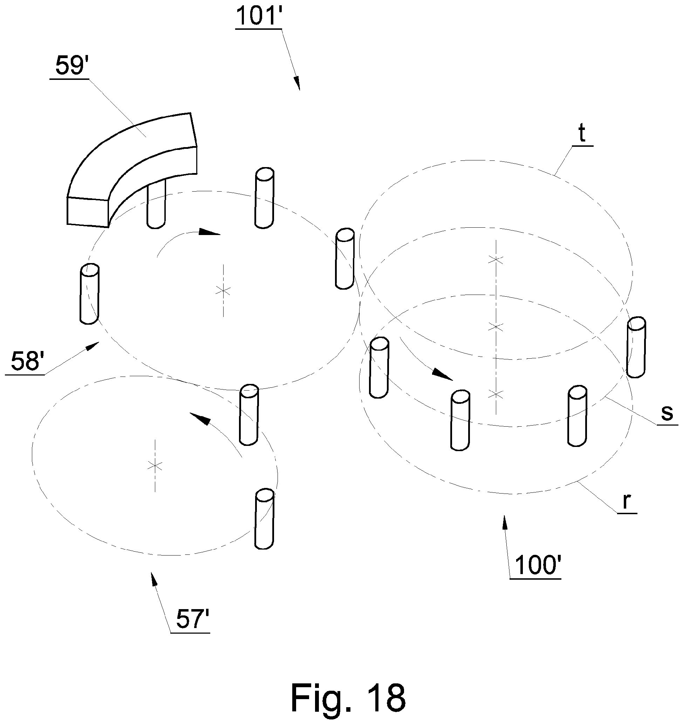

Fig. 18 shows, in a simplified form, a device 101' for producing rod-like articles for tobacco industry equipped with a feeding device 57' for feeding the rod-like articles in the form of tubes, for example having the form of a drum conveyor, a transporting device 58' for transferring the rod-like articles and a device for feeding the filling 59' into the rod-like article and a forming device 100' for forming the tips of the rod-like article such as described above. In this embodiment the axes of rotation of the drum conveyors are arranged vertically. The device for feeding the filling 59' may be configured to feed the capsules, the rod-like articles or irregular objects. The device for feeding the filling 59' may be used to fill the interior of the formed rod-like article 1" with the granulate, for example activated carbon, i.e. the rod-like article which is closed at one side, and in this case the device 100' for forming the tips completely closes the other tip of the article.

## Claims

1. A device for forming tips of a rod-like article, **characterized in that** it comprises:
- a drum conveyor (26) having at least one flute (28) for transferring the rod-like article (1, 5, 10, 15) transversally to an axis (k) of the rod-like article (1, 5, 10, 15), wherein the flute (28) for transferring the rod-like article (1, 5, 10, 15) is configured to move along a first circular path (s);
- a first pressing element (32, 51) configured to move along a second circular path (r) and a second pressing element (33, 45, 53) configured to move along a third circular path (t), wherein the third circular path (t) is located opposite to the second circular path (s) with respect to the first circular path (r), wherein the first pressing element (32, 51) and the second pressing element (33, 45, 53) form a pair (34, 47, 50) of the pressing elements located opposite to each other, wherein at least one pressing element (32, 33, 51, 53) of the pair (34, 47, 50) of the pressing elements (32, 33, 45, 51, 53) has a concave forming surface (35, 36, 52, 54),
- wherein the pressing elements (32, 33, 45, 51, 53) are configured to move linearly along an axis (Y) of the flute (28) that is transverse to the first circular path (s) towards and away from each other,
- wherein the first circular path (s), the second circular path (r) and the third circular path (t) are arranged coaxially.

2. The device according to claim 1, wherein the concave forming surface (35, 36, 52, 54) is a surface selected from the group comprising a spherical surface, a paraboloid surface and a conical surface.

3. The device according to claim 1 or 2, wherein a protrusion (55, 56) for forming the tip of the rod-like article (1', 1", 5', 10', 15') is located on the concave forming surface (52, 54).

4. The device according to claim 3, wherein the protrusion (55, 56) has the form of a cylindrical pin.

5. The device according to claim 3, wherein the protrusion (55, 56) has the form of a conical pin.

6. The device according to any of claims from 1 to 5, wherein both pressing elements (32, 33, 51, 53) have the concave forming surface (35, 36, 52, 54).

7. The device according to any of claims from 1 to 5, wherein the first pressing element (32) has the concave forming surface (35) and the second pressing element (45) is a supporting element terminated with a flat supporting surface (46).

8. The device according to any of claims from 1 to 7, wherein the pressing elements (32, 33, 45, 51, 53) are slidably mounted in rotating disks (37, 39).

9. A device for producing rod-like articles for tobacco industry, **characterized in that** it comprises:
- a feeding device (57, 57') for feeding the rod-like article (1, 5, 10, 15),
- a transporting device (58, 58') for transferring the rod-like article (1, 5, 10, 15),
- a device for feeding a filling (59, 59') into the rod-like article (1, 5, 10, 15) and
- a forming device (100, 100') for forming tips of the rod-like article (1, 5, 10, 15) according to any of claims from 1 to 8, located along a transporting path of the rod-like article (1, 5, 10, 15) downstream of the device for feeding the filling (59, 59') into the rod-like article (1, 5, 10, 15).

10. A method for forming tips of a rod-like article, **characterized in that** it comprises the steps of:
- positioning the rod-like article (1, 5, 10, 15) into a flute (28) on a first circular movement path (s) and transferring the rod-like article (1, 5, 10, 15) along the first circular movement path (s) transversally to an axis (k) of said rod-like article (1, 5, 10, 15),
- transferring coaxially arranged pressing elements (32, 33, 45, 51, 53) in pairs along a second circular path (r) and along a third circular path (t) synchronously with the movement of the rod-like article (1, 5, 10, 15), wherein the third circular path (t) is located on the opposite side of the second circular path (s) with respect to the first circular path (r), and
- linearly moving the pressing elements (32, 33, 45, 51, 53) along an axis (Y) of the flute (28) that is transverse to the first circular path (s) towards and away from each other,
- wherein at least one pressing element (32, 33, 51, 53) from the pair (34, 47, 50) of the pressing elements (32, 33, 45, 51, 53) has a concave forming surface (35, 36, 52, 54), such that the linear movement of the pressing elements (32, 33, 45, 51, 53) towards each other causes a decrease of a diameter of at least one tip of the rod-like article (1', 1", 5', 10', 15').
